# FASCICULE DE BREVET EUROPEEN

(11) **EP 2 901 062 B1**
(45) Date de publication et mention de la délivrance du brevet: **08.05.2019**
(21) Numéro de dépôt: 13782759.8
(22) Date de dépôt: 27.09.2013
(51) Int. Cl.: F16L 11/08, F16L 11/12, G01L 1/24

(54) **CONDUITE TUBULAIRE FLEXIBLE INSTRUMENTEE**
BESTÜCKTE FLEXIBLE ROHRLEITUNG
INSTRUMENTED FLEXIBLE TUBULAR PIPE

(30) Priorité: 28.09.2012 FR 1202584
(43) Date de publication de la demande: 05.08.2015
(73) Titulaire: Technip France, 92400 Courbevoie (FR)
(72) Inventeur: FELIX-HENRY, Antoine, F-76000 Rouen (FR); LEMBEYE, Philippe, F-76380 Montigny (FR)
(74) Mandataire: Fédit-Loriot
(86) Numéro de dépôt international: PCT/FR2013/052301
(87) Numéro de publication internationale: WO 2014/049292

(56) Documents cités:
- EP-A1- 2 063 068
- WO-A1-2010/055323
- KUANG K S C ET AL: "An evaluation of a novel plastic optical fibre sensor for axial strain and bend measurements; An evaluation of a novel plastic optical fibre sensor for axial strain and bend measurements", MEASUREMENT SCIENCE AND TECHNOLOGY, IOP, BRISTOL, GB, vol. 13, no. 10, 4 septembre 2002 (2002-09-04), pages 1523-1534, XP020063616, ISSN: 0957-0233, DOI: 10.1088/0957-0233/13/10/303

## Description

La présente invention concerne une conduite tubulaire flexible sous-marine pour le transport d'hydrocarbures comportant des agents corrosifs, notamment de l'eau et des gaz acides. Elle concerne aussi une méthode de détermination des propriétés de cette conduite.

La présente invention vise plus particulièrement les conduites tubulaires flexibles de type non lié (« unbonded » en langue anglaise), telles que décrites dans les documents normatifs API 17J « Spécification for Unbonded Flexible Pipe » et API RB 17B « Recommended Practice for Flexible Pipe » publiés par l'American Petroleum Institute.

Ces conduites flexibles comprennent usuellement, de l'intérieur vers l'extérieur, une carcasse interne, une gaine interne d'étanchéité, une voûte de pression, plusieurs nappes d'armures de traction et une gaine de protection externe.

La carcasse interne a pour fonction principale la reprise des efforts radiaux d'écrasement, par exemple ceux liés à la pression hydrostatique. Elle est réalisée à partir d'un feuillard en acier inoxydable profilé et enroulé à pas court pour former des spires jointives agrafées entre elles. La gaine interne d'étanchéité, généralement appelée gaine de pression (« pressure sheath » en langue anglaise), est une gaine polymérique extrudée ayant pour fonction le confinement du fluide circulant dans la conduite. Quant à la voûte de pression (« pressure vault » en langue anglaise), elle est formée généralement d'un fil de forme métallique enroulé à pas court en spires jointives autour de la gaine interne d'étanchéité. Elle permet ainsi de reprendre les efforts radiaux liés à la pression du fluide circulant dans la conduite. Les nappes d'armure de traction ont pour fonction la reprise des efforts de traction qui s'exercent sur la conduite. Ces nappes sont constituées de fils d'armure généralement métalliques enroulés hélicoïdalement à pas long autour de la voûte de pression. Enfin, une gaine externe de protection en matériau polymérique est extrudée autour des armures de traction.

Dans la présente demande, le terme « à pas court » caractérise les enroulements hélicoïdaux présentant un angle d'hélice de valeur absolue comprise entre 70° et 90°. Le terme « à pas long » caractérise quant à lui les enroulements hélicoïdaux présentant un angle d'hélice de valeur absolue inférieure ou égale à 60°. La carcasse interne et la voûte de pression présentent des angles d'hélice de valeur absolue généralement proche de 85°. Les conduites flexibles comportent généralement une ou deux paires de nappes croisées d'armures de traction, lesdites nappes ayant un angle d'hélice de valeur absolue typiquement comprise entre 20° et 60°, et avantageusement entre 25° et 55°.

Lorsque la conduite flexible, quelle que soit sa nature, est soumise à une pression externe qui est plus élevée que la pression interne, il peut se produire une compression axiale qui est connue de l'homme du métier sous le nom d'effet de fond inverse (« reverse end cap effect » en langue anglaise). Cet effet génère des contraintes de compression axiale qui ont tendance à raccourcir la conduite. Ces efforts de compression peuvent atteindre un niveau très élevé. Par exemple, une conduite de transport de gaz de diamètre extérieur 300 mm installée à une profondeur de 2000 m peut subir un effort de compression axiale de l'ordre de 140 tonnes lorsqu'elle est dépressurisée (200 bar à l'extérieur - 1 bar à l'intérieur).

L'effet de fond inverse a tendance à comprimer axialement la conduite flexible, à raccourcir sa longueur et à augmenter son diamètre, ce qui a tendance à provoquer un gonflement des nappes d'armures de traction. Dans le cas où la gaine externe de la conduite est étanche, la pression hydrostatique régnant à l'extérieur de la conduite s'oppose efficacement au gonflement des armures de traction. Par contre, si la gaine externe n'est plus étanche, par exemple suite à une déchirure accidentelle, la pression hydrostatique ne s'oppose plus au gonflement des nappes d'armures de traction. Par suite, en l'absence d'un moyen additionnel ayant pour fonction de limiter ce gonflement, les fils composant les nappes d'armures de traction peuvent flamber selon un mode radial, ce qui peut provoquer une déformation locale irréversible desdites nappes d'armures ayant la forme d'une « cage d'oiseau » (« bird cage » en anglais), et ainsi entraîner la ruine de la conduite.

Une solution connue permettant de réduire ce risque de flambement radial en "cage d'oiseau" consiste à enrouler à pas court, autour des nappes d'armures de traction, des rubans de maintien renforcés de mèches de fibres d'aramide présentant une grande résistance mécanique en traction suivant leur axe longitudinal, ce qui permet de limiter le gonflement des nappes d'armures de traction. Ces rubans de maintien présentent en outre une grande souplesse en flexion, ce qui facilite leur enroulement autour des nappes d'armures. Enfin, à caractéristiques mécaniques égales, ils sont beaucoup plus légers que des rubans métalliques, ce qui permet de réduire le poids de la conduite flexible. On pourra notamment se référer aux documents WO03/083343, FR2926347 et WO2008/135663 qui décrivent des conduites flexibles équipées de tels rubans de maintien. Ces rubans sont aussi couramment désignés sous les noms anglais « High Strength Tapes » ou «Anti-Buckling Tapes ».

Ces rubans de maintien se présentent sous la forme de faisceaux de mèches de fibres orientées parallèlement à l'axe longitudinal du ruban. Ces mèches de fibres longitudinales peuvent être assemblées les unes avec les autres sous la forme d'un faisceau relativement plat ayant une section sensiblement rectangulaire du type de celle d'un ruban ou d'une bande. Différents modes de réalisation de ces rubans de maintien sont décrits dans les documents WO97/12753 et WO97/13091. Il est également possible d'utiliser des rubans de maintien constitués d'une section centrale sensiblement rectangulaire et de deux bords longitudinaux plus minces que la section centrale, tel que ceux décrits dans le document EP1419338.

Ces rubans de maintien sont dimensionnés pour résister durablement aux sollicitations mécaniques statiques et dynamiques qu'ils auront à endurer, ainsi qu'au phénomène de vieillissement lié à leur possible immersion dans l'eau de mer en cas de déchirure accidentelle de la gaine externe de la conduite. Le risque de rupture en service d'un ruban est donc extrêmement faible.

Ce risque n'est cependant pas nul, notamment en cas de sollicitation anormale de la conduite flexible. La conséquence d'une rupture d'un ruban de maintien pouvant être la ruine de la conduite, il est nécessaire de pouvoir détecter très rapidement un tel incident.

De plus, l'aptitude des rubans de maintien à remplir leur fonction anti-gonflement dépend de la tension sous laquelle ils ont été enroulés lors de leur bobinage autour des armures de traction. En effet, la couche anti-gonflement est généralement constituée de plusieurs rubans enroulés cote à cote et/ou l'un sur l'autre. Par suite, il est nécessaire que les efforts de reprise du gonflement soient répartis de façon homogène entre ces différents rubans, faute de quoi un des rubans pourrait être excessivement sollicité et rompre prématurément. C'est pourquoi il est nécessaire d'enrouler ces rubans sous tension, afin d'éviter des jeux, et de s'assurer que les tensions de pose des différents rubans soient sensiblement égales.

Ce problème de contrôle des tensions de pose est encore plus important dans le cas où les rubans de maintien sont volontairement enroulés sous très forte tension, comme cela est décrit dans la demande française n° 11 52609. En effet, dans un tel cas, la tension de pose du ruban de maintien affecte directement la fonction anti-gonflement, si bien qu'en cas de tension insuffisante, la conduite flexible risque de gonfler davantage que prévu, avec pour conséquence potentielle un flambement des couches d'armures. Il est également connu du document WO 2010/055323 A1 d'incorporer une fibre optique formant capteur dans une conduite flexible.

Dans le but de résoudre ces problèmes, la présente invention propose une conduite tubulaire flexible du type non lié selon la revendication 1.

La conduite tubulaire flexible selon l'invention peut comprendre l'une ou plusieurs des caractéristiques définies dans les revendications 1 à 10.

L'invention a également pour objet une méthode de détermination des propriétés d'une telle conduite tubulaire, cette méthode de contrôle comportant les étapes suivantes :
- raccordement de ladite fibre optique à un appareil d'émission d'un signal optique destiné à être injecté dans ladite fibre optique et à un appareil de mesure d'un signal optique ayant transité le long de ladite fibre optique ;
- injection par ledit appareil d'émission d'un signal optique dans ladite fibre optique ;
- circulation d'un signal optique le long de ladite fibre optique ;
- mesure par ledit appareil de mesure d'un signal optique ayant transité le long de ladite fibre optique ;
- détermination à l'aide de cette mesure de l'allongement de ladite fibre optique.

Ainsi il est possible d' instrumenter le ruban de maintien avec un capteur à fibre optique capable de mesurer les allongements de ce dernier. La fibre optique est orientée parallèlement à l'axe du ruban maintien de sorte qu'elle soit soumise au même allongement que ce dernier. Il existe plusieurs méthodes de mesure de l'allongement d'une fibre optique à partir d'un appareil connecté à au moins l'une des 2 extrémités de la fibre. Ces méthodes, qui seront rappelées plus bas, sont connues et ne constituent donc pas en elles-mêmes l'objet principal de l'invention.

Les mesures effectuées avec ce capteur à fibre optique permettent de détecter instantanément une rupture du ruban de maintien. Elles permettent aussi d'évaluer les efforts de traction endurés par le ruban, ce qui permet de détecter une augmentation anormale de ces efforts longtemps avant que celle-ci ne provoque une éventuelle rupture.

Etant donné que le ruban de maintien est enroulé à pas court, c'est-à-dire avec un angle d'hélice proche de 90°, l'allongement relatif du ruban est sensiblement égal au gonflement relatif de la conduite. Par suite, en mesurant l'allongement relatif du capteur à fibre optique le long de ce dernier, on peut facilement évaluer le gonflement relatif des armures de traction le long de la conduite. Ceci permet notamment de vérifier l'intégrité de la conduite via à vis du risque de déchirure de gaine et de flambage des armures. Ainsi, il est possible de détecter facilement une déchirure de gaine et une inondation de la paroi de la conduite. En effet, en cas de déchirure de la gaine externe d'une conduite soumise à un effet de fond inverse (pression interne < pression hydrostatique), la pression hydrostatique ne s'oppose plus au gonflement des armures et c'est alors la couche de maintien qui prend alors le relai pour assurer cette fonction. Or, il s'avère que la couche de maintien est généralement moins efficace que la pression hydrostatique si bien que les armures vont alors légèrement gonfler. Ce gonflement peut être facilement détecté en mesurant l'allongement de la fibre optique, ce qui permet par suite de détecter la déchirure de la gaine externe.

Plusieurs types de fibres optiques peuvent convenir pour mettre en oeuvre la présente invention.

Les fibres optiques en verre (Glass Optical Fibers en anglais) présentent l'avantage d'une très faible atténuation optique (< 3 dB/km pour un rayonnement de longueur d'onde 850 nm) ce qui permet de les utiliser pour effectuer des mesures déportées à plus de 5km, voire jusqu'à 10km. Ces fibres résistent de plus très bien aux températures élevées, certaines fibres revêtues de carbone et de polymide pouvant fonctionner jusqu'à 300°C. Leur inconvénient majeur est leur manque de ductilité et leur faible allongement à la rupture. En pratique, il est recommandé de ne pas les allonger de plus de 1%, faute de quoi on risquerait une rupture prématurée, notamment dans le cas d'une sollicitation cyclique pouvant générer un phénomène de fatigue. Leur emploi est donc limité aux rubans de maintien présentant un faible allongement sous charge, c'est-à-dire aux rubans comportant des mèches de fibres ayant un module d'élasticité élevé, typiquement supérieur à 100GPa. Ainsi, par exemple, lorsque les mèches sont en acier (module 200GPa) ou en Kevlar® 49 (module 120 GPa) il est possible d'instrumenter le ruban avec une fibre optique en verre.

Par contre, dans le cas où les mèches présentent un module d'élasticité inférieur à 100 GPa, il est préférable d'utiliser une fibre optique polymère. De telles fibres sont couramment désignées sous l'abréviation POF (Plastic Optical Fiber en anglais). Elles présentent l'avantage d'une grande ductilité et sont capables de supporter durablement des allongements supérieurs à 5%, voire à 10%. Leur inconvénient majeur est leur atténuation optique qui est bien moins bonne que celle des fibres optiques en verre. Les fibres optiques polymèriques les plus courantes, qui sont constituées de polymethylmethacrylate (PMMA), ont une atténuation de l'ordre de 150 dB/km à 850nm, ce qui limite leur application à une longueur maximale de l'ordre de 100 mètres. Mais il existe aussi des fibres optiques polymériques plus performantes, notamment celles en polymère amorphe perfluoré, qui présentent une atténuation de l'ordre de 30 dB/km à 850nm. Avec ce type de fibre, il est possible d'effectuer des mesures déportées à une distance de 500m.

Les fibres optiques polymériques à base de poly-perfluoro-butenyl-vinyl-ether (polymère commercialisé sous la marque Cytop®) sont particulièrement avantageuses pour mettre en oeuvre la présente invention. En effet, certaines fibres à gradient d'indice constituées à partir de ce polymère présentent une atténuation d'à peine 10dB/km dans le proche infrarouge, sous réserve que des précautions particulières soient prises lors de leur fabrication. De telles fibres permettent d'effectuer des mesures déportées à une distance de l'ordre de 1000m. La température maximale d'utilisation de telles fibres est de l'ordre de 80°C, mais il est possible de les soumettre sans dommage à des températures supérieures à 100°C, notamment lors de la phase de fabrication du ruban instrumenté.

D'autres particularités et avantages de l'invention ressortiront à la lecture de plusieurs modes de réalisation de l'invention, ainsi que des dessins annexés sur lesquels :
la figure 1 est une vue en perspective partielle d'une conduite tubulaire flexible selon l'invention ;
la figure 2 est une vue en coupe d'un ruban de maintien selon un premier mode de réalisation ;
la figure 3 est une vue en coupe d'un ruban de maintien selon un deuxième mode de réalisation ;
la figure 4 est une vue en coupe d'un ruban de maintien selon un troisième mode de réalisation ;
la figure 5 est une vue en coupe d'un ruban de maintien selon un quatrième mode de réalisation ;
la figure 6 est un vue schématique d'ensemble d'une conduite tubulaire flexible instrumentée selon la présente invention.

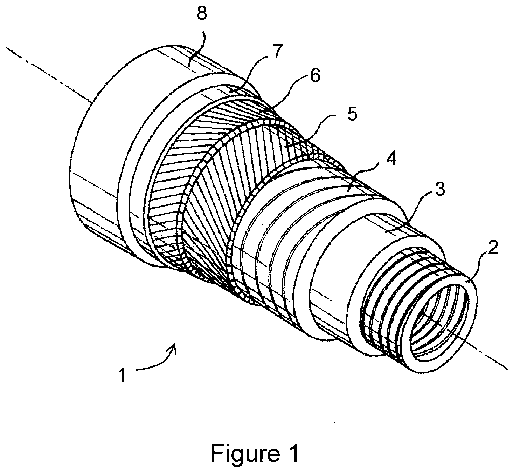

La conduite tubulaire flexible (1) représentée sur la figure 1 comprend de l'intérieur vers l'extérieur une carcasse interne (2), une gaine interne d'étanchéité (3), une voûte de pression (4), une paire d'armures de traction (5,6), une couche de maintien (7) et une gaine externe (8).

La carcasse interne (2) est constituée à partir d'un feuillard métallique inoxydable profilé et enroulé à pas court pour former des spires jointives agrafées entre elles. La fonction principale de la carcasse interne (2) est la reprise des efforts radiaux d'écrasement, par exemple ceux liés à la pression hydrostatique ou ceux exercés par des équipements externes, notamment lors de l'installation en mer de la conduite. La conduite (1) représentée sur la figure 1 est dite « à passage non lisse » (« rough bore » en langue anglaise) du fait de la présence et de la géométrie de la carcasse interne (2). Cependant, la présente invention pourrait aussi s'appliquer à une conduite ne comportant pas de carcasse, une telle conduite étant dite « à passage lisse » (« smooth bore » en langue anglaise), car sa première couche en partant de l'intérieur est la gaine interne d'étanchéité (3), cette gaine étant en fait un tube polymérique extrudé présentant une paroi intérieure lisse.

La gaine interne d'étanchéité (3) est une gaine polymérique extrudée ayant pour fonction le confinement de l'hydrocarbure circulant à l'intérieur de la conduite (1), la carcasse interne (2) n'étant pas étanche

La voûte de pression (4) est formée d'un fil de forme métallique enroulé à pas court en spires jointives autour de la gaine interne d'étanchéité. Elle permet ainsi de reprendre les efforts radiaux liés à la pression du fluide circulant dans la conduite. Bien que la plupart des conduites tubulaires flexibles comprennent une voûte de pression, l'invention pourrait aussi s'appliquer à des conduites ne comportant pas une telle couche.

Les nappes d'armure de traction (5,6) ont pour fonction la reprise des efforts de traction qui s'exercent sur la conduite. Ces nappes sont constituées de fils d'armure généralement métalliques enroulés hélicoïdalement à pas long autour de la voûte de pression. Elles sont croisées de façon à équilibrer les efforts de torsion.

La gaine externe de protection (8) en matériau polymérique est extrudée autour de la couche de maintien (7). L'invention pourrait aussi s'appliquer à des conduites ne comportant pas de gaine externe, bien que ce cas ne présente pas un grand intérêt pratique.

La couche de maintien (7) comporte un ou plusieurs rubans de maintien enroulés à pas court autour des nappes d'armure de traction (5,6). La couche de maintien (7) peut comporter plusieurs couches de rubans enroulés, ces couches étant superposées les unes sur les autres.

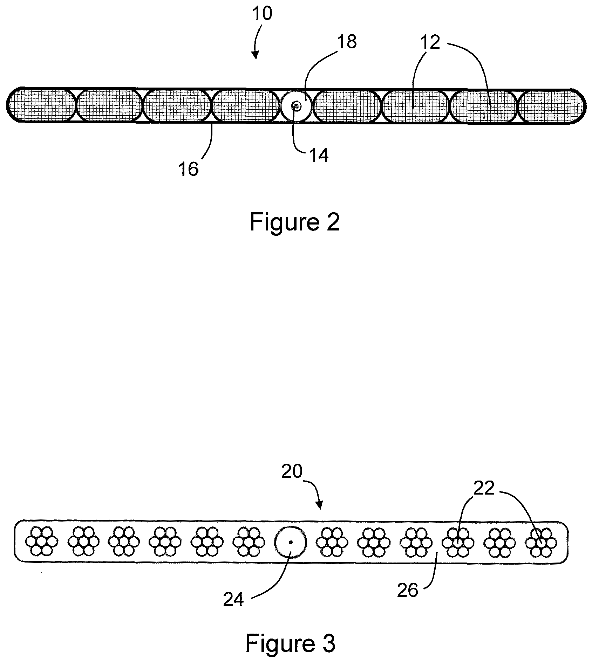

Le ruban de maintien (10) représenté sur la figure 2 comporte plusieurs mèches de fibres d'aramide (12) maintenues les unes contre les autres par des moyens de contention (16) comportant des fibres transversales entourant lesdites mèches longitudinales. Une fibre optique (14) orientée parallèlement à l'axe du ruban est disposée dans sa partie centrale. Cette fibre optique, dont le diamètre extérieur est de l'ordre de 125 à 700 micromètres, est avantageusement entourée d'une gaine ou d'un tube de protection (18). Selon un mode de réalisation avantageux, la fibre optique est une fibre à gradient d'indice à base de poly-perfluoro-butenyl-vinyl-ether présentant un diamètre extérieur de l'ordre de 500 à 750 micromètres (coeur de diamètre 50 à 65 micromètres). De telles fibres sont notamment commercialisées par la société Chromis Fiberoptics sous les références GigaPOF®-50SR et GigaPOF®-62LD. L'ajout d'un tube ou d'une gaine de protection polymérique permet de limiter les phénomènes d'usure de la fibre optique par frottement avec les mèches d'aramide, ainsi que ceux du vieillissement chimique au contact de l'eau de mer. Dans le mode de réalisation représenté à la figure 2, l'épaisseur de la fibre optique munie de son dispositif de protection est sensiblement égale à celle du ruban de maintien, typiquement de l'ordre de 0,5 mm à 2mm.

Le ruban de maintien (20) représenté sur la figure 3 comporte plusieurs mèches de fibres métalliques (22), lesdites fibres métalliques étant des fils d'acier de très petit diamètre présentant une très grande limite élastique en traction. De tels fils sont notamment utilisés pour réaliser les carcasses métalliques des pneumatiques, et ils sont connus sous le nom de « steel cords ». Leur diamètre est généralement de l'ordre de quelques dixièmes de millimètre, et leur limite élastique peut atteindre et dépasser 2000 MPa. Les mèches constituées avec ces fils d'acier sont en fait des câbles métalliques de très petit diamètre. Ces mèches sont maintenues ensemble par une matrice polymérique (26) dans laquelle elles sont noyées. Cette matrice qui a été extrudée autour des mèches constitue le moyen de contention (26) de ce ruban. Une fibre optique (24) est elle aussi noyée dans cette matrice. Dans ce mode de réalisation, il est avantageux de choisir une fibre optique en verre, car le module d'élasticité en traction des mèches en acier est très élevé (de l'ordre de 200 GPa) si bien que le ruban s'allonge très peu lorsque la conduite est en service (moins de 0,5% d'allongement). Une fibre optique en verre est donc tout à fait apte à résister durablement à ce type de sollicitation mécanique. De plus, elle est aussi capable de résister à l'élévation de température pendant l'extrusion de la matrice polymérique (26) du ruban, notamment lorsque la matrice polymérique (26) est constituée à base de polyéthylène ou de polyamide.

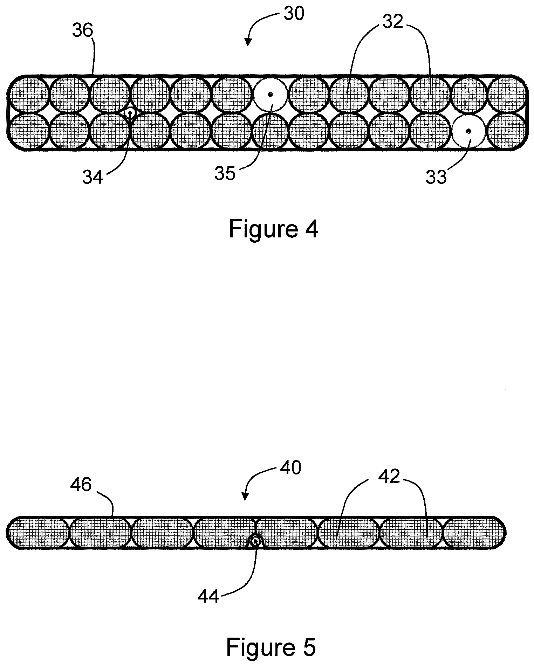

Le ruban de maintien (30) représenté à la figure 4 comporte deux épaisseurs superposées de mèches de fibres (32) maintenues ensemble par des moyens de contention (36). Plusieurs fibres optiques (33, 34, 35) ont été intégrées dans ce ruban à divers endroits dans la largeur et dans l'épaisseur du ruban.

Le ruban de maintien (40) représenté à la figure 5 comporte lui aussi les mèches de fibre d'aramide (42) maintenues par des moyens de contention (46) du type fibres transversales entourant totalement et/ou partiellement lesdites mèches. Dans cette variante, la fibre optique (44) présente un diamètre sensiblement inférieur à l'épaisseur du ruban. Dans ce cas, il est avantageux de disposer cette fibre à proximité de la grande face du ruban qui est située du coté de l'intérieur de la conduite (la grande face opposée étant tournée vers l'extérieur de la conduite). Cette disposition particulière évite que la fibre ne se déplace dans l'épaisseur du ruban lorsque ce dernier est soumis à des efforts de tension. En effet, lorsque la couche de maintien gonfle, la fibre optique (44) reste en contact direct avec les moyens de contention (46) situés du coté intérieur de la conduite.

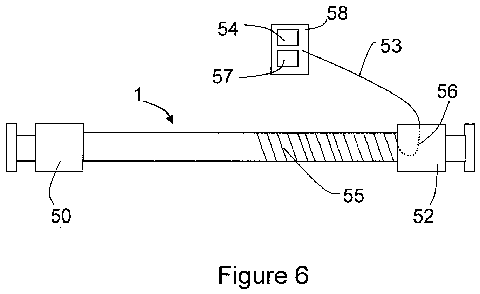

Le dispositif représenté à la figure 6 comporte une conduite flexible (1) équipée de deux embouts d'extrémité (50, 52). La couche de maintien de cette conduite est instrumentée avec une fibre optique (55) qui s'étend hélicoïdalement le long de la conduite à partir d'un des embouts (52). La fibre optique (55) intégrée dans la conduite est reliée à un appareil (58) comportant un appareil d'émission (54) d'un signal optique, ainsi qu'un appareil de mesure (57) d'un signal optique ayant transité le long de la fibre, cette liaison étant assurée par un ou plusieurs câbles à fibre optique (56, 53) intercalés entre d'une part la fibre optique (55) intégrée dans la conduite et d'autre part les appareils d'émission (54) et de mesure (57). Des moyens sont aménagés dans l'embout (52) pour laisser passer ces câbles.

Selon un mode avantageux de réalisation de l'invention, la conduite (1) est une conduite flexible reliant le fond marin à une installation pétrolière située à la surface. Ce type de conduite montante (« riser » en anglais) est fortement sollicité en partie basse, au niveau du point de contact avec le fond marin (pression hydrostatique maximale et phénomène de fatigue lié aux variations de courbure associées au mouvement de l'installation de surface de fait de la houle). Il est donc important de surveiller l'intégrité de la couche de maintien au niveau du point de contact avec le fond marin. Cette zone d'une centaine de mètres de long est bien délimitée et généralement située à proximité de l'embout situé sur le fond marin. Il est donc avantageux d'instrumenter uniquement cette zone jusqu'à l'embout situé sur le fond marin pour faire ensuite remonter le signal jusqu'aux appareils d'émission (54) et de mesure (57) situés à la surface, la remontée du signal pouvant se faire via un câble à fibre optique (53) distinct de la conduite (1).

Plusieurs méthodes de mesure bien connues peuvent être utilisées pour déterminer l'allongement de la fibre optique. On peut notamment citer la méthode utilisant des réseaux de Bragg préalablement photo-imprimés le long de la fibre. La méthode de mesure distribuée par réflectométrie Brillouin est une variante intéressante car elle permet de déterminer le profil d'allongement tout le long de la fibre sans besoin de modifier préalablement cette dernière.

Pour ce qui est des fibres optiques en polymère, outre les réseaux de Bragg, il est également possible d'utiliser une méthode basée sur de la réflectométrie Rayleigh couplée à un traitement de signal du type inter corrélation permettant de déterminer tronçon par tronçon les déformations axiales de la fibre.

Cette méthode avantageuse permet de déterminer le profil d'allongement tout le long de la fibre sans avoir besoin de modifier préalablement cette dernière. Cette méthode est basée sur l'emploi d'un réflectomètre optique temporel, connu sous le nom OTDR (« Optical Time Domain Reflectometry » en anglais). Cet appareil est couramment utilisé dans le domaine des télécommunications pour tester les fibres optiques. L'OTDR est connecté à une des deux extrémités de la fibre. Il comporte un appareil d'émission (54) d'impulsions lumineuses qui se propagent le long de la fibre optique, cet appareil d'émission étant en pratique un laser. Du fait notamment du phénomène de diffusion dite élastique ou de Rayleigh, l'onde lumineuse qui se propage le long de la fibre optique s'atténue progressivement, chaque point de la fibre optique renvoyant vers la source une proportion très faible de l'impulsion lumineuse incidente (phénomène de rétro diffusion). L'OTDR est aussi équipé d'un appareil de mesure (57) d'un signal optique ayant transité le long de la fibre, à savoir dans le cas présent du signal lumineux réfléchi par la fibre optique. A partir de cette mesure, connaissant la vitesse de propagation de l'impulsion lumineuse le long de la fibre, cet appareil fournit une courbe donnant l'intensité du signal réfléchi en fonction de la longueur de la fibre optique.

Dans le cas d'une fibre optique homogène parfaite, cette courbe présente la forme d'une exponentielle décroissante. Dans le cas d'une fibre optique réelle sujette à des imperfections locales (variations locale d'indice optique et/ou de géométrie, micro fractures,...) les réflexions induites par ces imperfections provoquent de petits écarts par rapport à la courbe exponentielle théorique. Ces petits signaux constituent en quelque sorte la signature de la fibre optique. Lorsque la fibre optique subit une traction, les distances séparant les imperfections locales augmentent dans la même proportion. Ainsi par exemple, si la fibre optique comporte au repos deux imperfections distantes de 200mm, ces imperfections seront distantes de 210mm lorsque la fibre aura subi un allongement de 5%. Cette augmentation de la distance séparant les deux imperfections peut être mesurée en comparant les courbes fournies par l'OTDR avant et après la mise sous tension de la fibre.

La précision de cette méthode de mesure dépend donc de la résolution spatiale de l'OTDR et de la longueur des tronçons de fibre pour lesquels l'allongement moyen doit être déterminé. En pratique, de bons résultats peuvent être obtenus en utilisant un OTDR de forte résolution (« High Resolution OTDR » en anglais), c'est-à-dire présentant une résolution spatiale inférieure à 5mm, et en travaillant sur des tronçons élémentaires au moins cent fois plus longs que la résolution spatiale de l'OTDR, et avantageusement mille fois plus long. Dans cet exemple, si la longueur de chaque tronçon élémentaire est 5m, l'allongement moyen de chacun de ces tronçons peut être déterminé avec une précision de l'ordre de un millième (0,1 %), ce qui est tout à fait satisfaisant pour l'application concernée. Ainsi, toujours pour le même exemple, si la longueur totale de la fibre optique polymérique est 1000m, il est avantageux de découper le signal en 200 tronçons successifs ayant chacun une longueur de 5m et de traiter ensuite le signal tronçon par tronçon afin de déterminer successivement les 200 valeurs d'allongement. Le fait de travailler avec des tronçons de l'ordre de 5m ne pose pas problème dans la mesure où le périmètre moyen de la couche de maintien (7) est de l'ordre du mètre, si bien que la longueur de chaque tronçon correspond à seulement quelques spires du ruban de maintien, c'est-à-dire en pratique à une longueur de conduite flexible inférieure à 0,5m. De la sorte, on peut déterminer le gonflement moyen de la couche de maintien (7) le long de la conduite flexible à raison d'une valeur tous les 0,5m de conduite, ce qui est tout à fait satisfaisant pour l'application concernée.

Le traitement d'inter corrélation mentionné plus haut permet de comparer un signal issu d'un tronçon avec un signal antérieur issu du même tronçon, afin de déterminer précisément le décalage entre ces deux signaux, ce qui permet d'en déduire l'allongement de ce tronçon.

Plutôt que d'utiliser un OTDR, il est possible d'utiliser un appareil d'émission (54) capable d'émettre des signaux optiques d'intensité modulée sinusoïdalement, la fréquence de cette modulation pouvant varier entre quelques MHz et quelques centaines de MHz, voire quelques GHz, ce qui permet de balayer toute une gamme de fréquences. Cet appareil d'émission est couplé à un appareil de mesure (57) du type photodiode reliée à un analyseur vectoriel (« Vector Network Analyser » en anglais) synchronisé sur le signal de modulation. De la sorte, on peut mesurer la fonction de transfert complexe associée à chaque fréquence de modulation, ce qui permet ensuite de passer du domaine fréquentiel au domaine temporel à l'aide d'un traitement par transformée de Fourier inverse. Cette variante de l'OTDR, connue sous le nom OFDR (« Optical Frequency Domain Reflectometry » en anglais) présente les avantages d'être plus rapide et plus précise.

## Revendications

1. Conduite tubulaire flexible (1) du type non lié adaptée au transport de fluides dans le domaine de l'exploitation pétrolière offshore, comportant au moins de l'intérieur vers l'extérieur une gaine d'étanchéité interne (3), une nappe d'armures de traction (5, 6) enroulée en hélice à pas long, et une couche de maintien (7) de ladite nappe d'armure de traction (5, 6), comprenant au moins un ruban de maintien (10, 20, 30, 40) enroulé en hélice à pas court autour de ladite nappe d'armures de traction, ledit ruban de maintien comportant des mèches de fibres (12, 22, 32, 42), lesdites mèches de fibres étant orientées sensiblement selon la direction longitudinale dudit ruban de maintien, ledit ruban de maintien comprenant des moyens de contention (16, 26, 36, 46) pour maintenir ensemble lesdites mèches de fibres, ledit ruban de maintien (7) comportant au moins une fibre optique (14, 24, 33, 34, 35, 44, 55) orientée sensiblement selon la direction longitudinale dudit ruban de maintien (7) ; **caractérisée en ce que** lesdits moyens de contention comportent des fibres transversales orientées selon une direction sensiblement perpendiculaire à la direction longitudinale dudit ruban de maintien, lesdites fibres transversales maintenant ensemble lesdites mèches de fibres et ladite fibre optique.

2. Conduite tubulaire flexible selon la revendication 1, **caractérisée** en ce ladite fibre optique est une fibre optique polymère.

3. Conduite tubulaire flexible selon la revendication 2, **caractérisée en ce que** ladite fibre optique est réalisée à base d'un polymère amorphe perfluoré.

4. Conduite tubulaire flexible selon l'une quelconque des revendications 1 à 3, **caractérisée en ce que** la fibre optique présente à température ambiante un allongement à la rupture supérieur à 5%.

5. Conduite tubulaire flexible selon l'un quelconque des revendications 1 à 4, **caractérisée en ce que** ladite fibre optique est une fibre optique à gradient d'indice.

6. Conduite tubulaire flexible selon l'un quelconque des revendications 1 à 5, **caractérisée en ce que** lesdites mèches de fibres présentent à température ambiante un module d'élasticité en traction supérieur à 50 GPa.

7. Conduite tubulaire flexible selon l'une quelconque des revendications 1 à 6, **caractérisée en ce que** lesdits moyens de contention comportent une matrice polymérique entourant lesdites mèches de fibres et ladite fibre optique.

8. Conduite tubulaire flexible selon l'une quelconque des revendications 1 à 7, **caractérisée en ce que** ladite fibre optique est disposée à l'intérieur dudit ruban de maintien du coté le plus proche de l'axe de ladite conduite flexible.

9. Méthode de détermination des propriétés d'une conduite tubulaire flexible selon l'une quelconque des revendications 1 à 8 **caractérisée en ce qu'**elle comporte les étapes suivantes :
- raccordement de ladite fibre optique à un appareil d'émission (54) d'un signal optique destiné à être injecté dans la fibre optique et à un appareil de mesure (57) d'un signal optique ayant transité le long de ladite fibre optique ;
- injection par ledit appareil d'émission d'un signal optique dans ladite fibre optique ;
- circulation d'un signal optique le long de ladite fibre optique ;
- mesure par ledit appareil de mesure d'un signal optique ayant transité le long de ladite fibre optique ;
- détermination à l'aide de cette mesure de l'allongement de ladite fibre optique.

## Patentansprüche

1. Flexible Rohrleitung (1) des nicht verbundenen Typs für den Transport von Fluiden auf dem Gebiet der Offshore-Erdölförderung, aufweisend mindestens von innen nach außen eine innere Dichtungshülle (3), eine Schicht von Zugarmierungen (5, 6), die mit großer Gangart spiralförmig gewickelt ist, und eine Schicht zum Halten (7) der Schicht von Zugarmierungen (5, 6), die mindestens ein Halteband (10, 20, 30, 40) umfasst, das mit kleiner Gangart spiralförmig um die Schicht von Zugarmierungen gewickelt ist, wobei das Halteband Faserlunten (12, 22, 32, 42) aufweist, wobei die Faserlunten im Wesentlichen in der Längsrichtung des Haltebands orientiert sind, wobei das Halteband Fixiermittel (16, 26, 36, 46) umfasst, um die Faserlunten zusammenzuhalten, wobei das Halteband (7) mindestens einen Lichtwellenleiter (14, 24, 33, 34, 35, 44, 55) aufweist, der im Wesentlichen in der Längsrichtung des Haltebands (7) orientiert ist;
**dadurch gekennzeichnet, dass** die Fixiermittel Querfasern aufweisen, die in einer Richtung orientiert sind, die zu der Längsrichtung des Haltebands im Wesentlichen senkrecht ist, wobei die Querfasern die Faserlunten und den Lichtwellenleiter zusammenhalten.

2. Flexible Rohrleitung nach Anspruch 1, **dadurch gekennzeichnet, dass** der Lichtwellenleiter ein Polymer-Lichtwellenleiter ist.

3. Flexible Rohrleitung nach Anspruch 2, **dadurch gekennzeichnet, dass** der Lichtwellenleiter auf Basis eines amorphen Perfluorpolymers ist.

4. Flexible Rohrleitung nach einem der Ansprüche 1 bis 3, **dadurch gekennzeichnet, dass** der Lichtwellenleiter bei Umgebungstemperatur eine Bruchdehnung von mehr als 5 % aufweist.

5. Flexible Rohrleitung nach einem der Ansprüche 1 bis 4, **dadurch gekennzeichnet, dass** der Lichtwellenleiter ein Lichtwellenleiter mit Gradientenindex ist.

6. Flexible Rohrleitung nach einem der Ansprüche 1 bis 5, **dadurch gekennzeichnet, dass** die Faserlunten bei Umgebungstemperatur einen Zugelastizitätsmodul von mehr als 50 GPa aufweisen.

7. Flexible Rohrleitung nach einem der Ansprüche 1 bis 6, **dadurch gekennzeichnet, dass** die Fixiermittel eine Polymermatrix aufweisen, welche die Faserlunten und den Lichtwellenleiter umgibt.

8. Flexible Rohrleitung nach einem der Ansprüche 1 bis 7, **dadurch gekennzeichnet, dass** der Lichtwellenleiter im Inneren des Haltebands auf der Seite angeordnet ist, die der Achse der flexiblen Rohrleitung am nächsten ist.

9. Verfahren zum Bestimmen der Eigenschaften einer flexiblen Rohrleitung nach einem der Ansprüche 1 bis 8, **dadurch gekennzeichnet, dass** es die folgenden Schritte umfasst:
- Anschließen des Lichtwellenleiters an ein Gerät zum Aussenden (54) eines optischen Signals, das zum Einspeisen in den Lichtwellenleiter bestimmt ist, und an ein Gerät zum Messen (57) eines optischen Signals, das entlang des Lichtwellenleiters gelaufen ist,
- Einspeisen durch das Sendegerät eines optischen Signals in den Lichtwellenleiter;
- in Zirkulation Bringen eines optischen Signals entlang des Lichtwellenleiters;
- Messen durch das Sendegerät eines optischen Signals, das entlang des Lichtwellenleiters gelaufen ist;
- Bestimmen mit Hilfe dieser Messung der Dehnung des Lichtwellenleiters.

## Claims

1. A flexible tubular pipe (1) of the non-bonded type, suitable for conveying fluids in the field of offshore oil exploitation, comprising at least from the inside to the outside an internal sealing sheath (3), a ply of tensile-pressure armours (5, 6) wound in a long-pitch helix, and a layer (7) for retaining said tensile-pressure armours (5, 6) comprising at least one retaining strip (10, 20, 30, 40) wound in a short-pitch helix around said ply of tensile-pressure armours, said retaining strip comprising fibre strands (12, 22, 32, 42), said fibre strands being oriented substantially in the longitudinal direction of said retaining strip, said retaining strip comprising containment means (16, 26, 36, 46) for holding said fibre strands together, said retaining strip (7) comprising at least one optical fibre (14, 24, 33, 34, 35, 44, 55) oriented substantially in the longitudinal direction of said retaining strip (7);
**characterised in that** said containment means comprise transverse fibres oriented in a direction substantially perpendicular to the longitudinal direction of said retaining strip, said transverse fibres holding said fibre strands and said optical fibre together.

2. The flexible tubular pipe according to Claim 1, **characterised in that** said optical fibre is a polymeric optical fibre.

3. The flexible tubular pipe according to Claim 2, **characterised in that** said optical fibre is produced on the basis of a perfluorinated amorphous polymer.

4. The flexible tubular pipe according to any one of Claims 1 to 3, **characterised in that** the optical fibre has an elongation at break greater than 5% at ambient temperature.

5. The flexible tubular pipe according to any one of Claims 1 to 4, **characterised in that** said optical fibre is a graded-index optical fibre.

6. The flexible tubular pipe according to any one of Claims 1 to 5, **characterised in that** said fibre strands have a tensile modulus of elasticity greater than 50 GPa at ambient temperature.

7. The flexible tubular pipe according to any one of Claims 1 to 6, **characterised in that** said containment means comprise a polymeric matrix surrounding said fibre strands and said optical fibre.

8. The flexible tubular pipe according to any one of Claims 1 to 7, **characterised in that** said optical fibre is arranged inside said containment strip on the side closest to the axis of said flexible pipe.

9. A method for determining the properties of a flexible tubular pipe according to any one of Claims 1 to 8, **characterised in that** it comprises the following steps:
- connecting said optical fibre to an apparatus (54) for emitting an optical signal intended to be injected into the optical fibre and to an apparatus (57) for measuring an optical signal having travelled along said optical fibre;
- injecting, by said emission apparatus, an optical signal into said optical fibre;
- circulating an optical signal along said optical fibre;
- measuring, by said measurement apparatus, an optical signal having travelled along said optical fibre;
- determining the elongation of said optical fibre using said measurement.
